# EUROPEAN PATENT SPECIFICATION

(11) **EP 2 068 683 B1**
(45) Date of publication and mention of the grant of the patent: **24.11.2010**
(21) Application number: 06821721.5
(22) Date of filing: 02.10.2006
(51) Int. Cl.: A47J 27/212

(54) **CONTAINER WITH SIGNALLING DEVICE**
BEHÄLTER MIT MELDEVORRICHTUNG
RÉCIPIENT AVEC DISPOSITIF DE SIGNALISATION

(43) Date of publication of application: 17.06.2009
(73) Proprietor: Bialetti Industrie S.p.A., 25030 Coccaglio (BS) (IT)
(72) Inventor: RANZONI, Francesco, I-25030 Coccaglio (Brescia) (IT)
(74) Representative: Pulieri, Gianluca Antonio
(86) International application number: PCT/IT2006/000701
(87) International publication number: WO 2008/041247

(56) References cited:
- DE-A1- 2 909 129
- DE-A1- 3 045 143
- DE-U1- 29 519 776
- GB-A- 2 383 254
- US-A- 4 857 897

## Description

The present invention relates to a coffee maker for preparing beverages, which is provided with a signalling device.

By the general term "container" will be meant herein below any equipment intended to be placed on a cooker (either a gas cooker; electric ring, induction ring, etc.) for cooking food and/or preparing hot beverages. By the term "container" will be thus meant a coffee maker, cappuccino maker, pot, pan, saucepan, boiler, pressure cooker, and the like.

Common containers for cooking food and/or preparing hot beverages are widely used and appreciated for their simplicity and easiness of use. However, they are not without drawbacks .

While the user is preparing food or hot beverages, he/she has to pay attention to the container in order to be aware of when the time has come for manual intervention during the preparation step.

For example, when using "moka" coffee makers, which are intended for being placed on a cooker, the user must pay attention to the coffee maker while he/she is preparing coffee. In fact, when coffee has been completely delivered, the heat supply from the cooker must be manually interrupted.

This operation must be promptly carried out in order to avoid bad consequences that may worsen over time.

The first consequence that may occur, should heat supply be not interrupted, is the alteration of the coffee flavour because of boiling.

The second consequence is the coffee maker being damaged by prolonged operation without water.

Finally, the third and most serious consequence may be coffee spillage on the cooker, which may entail the risk of extinguishing the flame, thus causing dangerous gas leak. As example a coffee maker is shown in the docoment WO-A-2006/010404, according to the preamble of claim 1.

Similar problems may occur with any type of container, while preparing any food and/or beverage.

Accordingly, the object of the present invention is to provide a coffee-maker for preparing beverages, which at least partially overcomes the drawbacks cited with reference to the prior art.

Particularly, the task of the present invention is to provided a coffee maker which is capable of advising the user that the time has come to act on the cooker heat supply. Thereby, the user is relieved of the need of paying attention to the coffee maker while he/she is preparing beverage.

This object and these tasks are achieved by means of a coffee maker according to claim 1.

In order to better understand the present invention and appreciate the advantages thereof, some exemplary embodiments thereof will be described below, with reference to the annexed drawings, in which:

Fig. 1 shows a sectional view of a first container (coffee maker) according to the invention;

Fig. 2 is a sectional view of the detail designated with II in Fig. 1;

Fig. 3 shows a schematic elevational side view of a second container (pan) according to the invention;

Fig. 4 shows a schematic elevational side view of a third container (saucepan) according to the invention;

Fig. 5 shows a schematic elevational side view of a fourth container (boiler) according to the invention;

Fig. 6 shows a schematic elevational side view of a fifth container (pressure cooker) according to the invention.

In the annexed drawings, a container according to the invention is generally designated with 1.

The container 1 according to the invention comprises a device 3, which comprises, in turn, a temperature sensor 3 and a signaller 4 suitable to be triggered by the temperature sensor 3.

The device 2 further comprises an energy supply source 5 for the sensor 3 and signaller 4. In accordance with a preferred embodiment, the energy source of the device 2 comprises one or more batteries 50.

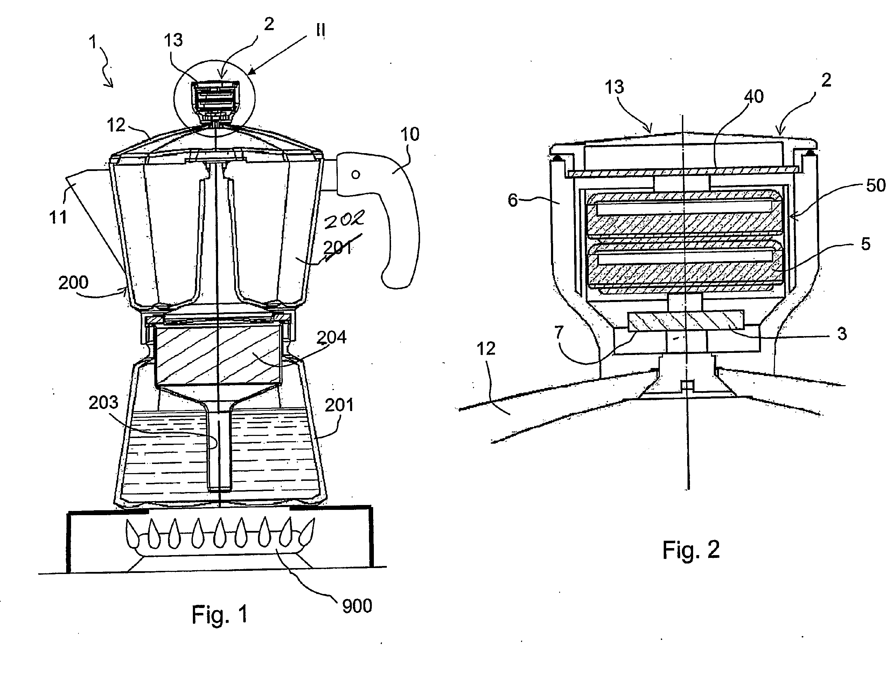

In accordance with several possible embodiments, the container 1 according to the invention is of a type suitable to be placed on an external heat source, typically a gas cooker 900 (see, for example, Fig. 1) or an electric ring or induction ring or the like.

In these embodiments, the energy source 5 for the device 2 is completely separate from the supply of the external heat source, such as the supply of the cooker 900.

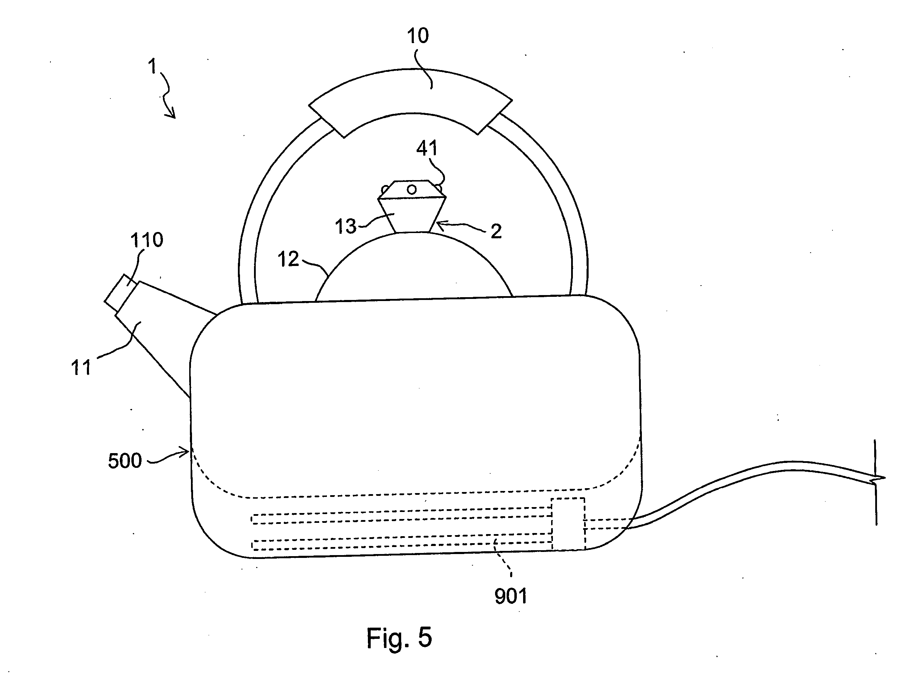

In accordance with other possible embodiments, the container 1 according to the present invention is, on the other hand, of the type comprising internal heat sources or specifically intended thereto and that can be univocally coupled. These heat sources are typically electric resistances 901 (see for example Fig. 5).

In these embodiments, the energy source 5 for the device 2 is also completely separate from the supply of the internal or dedicated heat sources, such as the supply of the electric resistances 901.

Finally, the device 2 comprises an airtight envelope 6. Particularly, the device 2 is preferably comprised within the envelope 6. The provision of the envelope 6 allows the container 1 according to the invention to be used and washed just like a normal known container.

In accordance with an embodiment, the temperature sensor 3 is mounted to the container 1 such as to take the temperature in an area internal to the container 1, where the food or beverage or vapours being released during preparation are contained.

In accordance with an embodiment, the temperature sensor 3 operates in a cyclic manner. In fact, it is normally in an inactivity state ("*sleep*" status) and is briefly activated at preset times for measuring the temperature. For example, the sensor can be activated every second and operated for less than 1 millisecond for measuring the temperature. Other combinations of activity/inactivity times of the sensors can be programmed in order to meet contingent requirements.

The combination described above, with less than 1 millisecond activity for every second of inactivity, allows obtaining an optimum time scan of the temperature variation, and at the same time, reducing energy consumption. For example, when the device 2 comprises batteries 50, a reduced energy consumption dramatically increases the life thereof.

The advantages resulting from the increase in the life of batteries 50 are not only limited to reducing the number of batteries employed in the operating life of the device 2, with clear benefits in terms of cost and environment protection. The long life of the batteries 50 also allows minimizing the operations for opening the air-tight envelope 6 and thus reducing the occasions in which the seal may be seriously affected to the detriment of the integrity of the device 2.

In accordance with an embodiment, the temperature sensor 3 is capable of detecting the temperature with a precision in the order of one degree centigrade.

The temperature sensor 3 is further capable of, after a temperature exceeding a preset threshold value has been detected, sending a command to the signaller 4.

In accordance with an embodiment, after the command has been transmitted to the signaller 4, the temperature sensor 3 turns to a prolonged inactivity phase lasting several minutes, such as up to 10 minutes. Thereby, those useless multiple commands are avoided, which would be very likely generated during the subsequent temperature measurements and which would be superposed to the first command available. Other durations of the prolonged inactivity phase of the sensor can be programmed in order to meet contingent requirements.

In accordance with an embodiment, the signaller 4 comprises an alarm 40. In accordance with other possible embodiments, the signaller 4 comprises an optical-light emitter, such as one ore more low-energy LEDs 41 (*Light Emitting Diodes*).

The alarm 40 is suitable for emitting tones or sequences of preset tones. The alarm 40 can be a simple buzzer suitable for repeating one individual tone, or it can be a more developed sounding mechanism, such as of the type known in the cellular phone field. In accordance with an embodiment, the alarm 40 is of the type commonly defined as "polyphonic", i.e. capable of faithfully reproducing complex sounds such as human voice or the sound of musical instruments. This effect can be also obtained by means of a small speaker, or by means of an electronic circuit capable of emitting more tones at the same time.

The melodies or tone sequences emitted by the alarm 40 and/or light sequences produced by the LEDs 41 are programmed in a suitable memory card 7 comprised within the device 2.

In accordance with an embodiment, the memory 7 is definitely programmed when manufacturing the device 2.

In accordance with other possible embodiments, on the other hand, the memory 7 can be re-programmed throughout the operative life of the device 2, for example it can be re-programmed by the user.

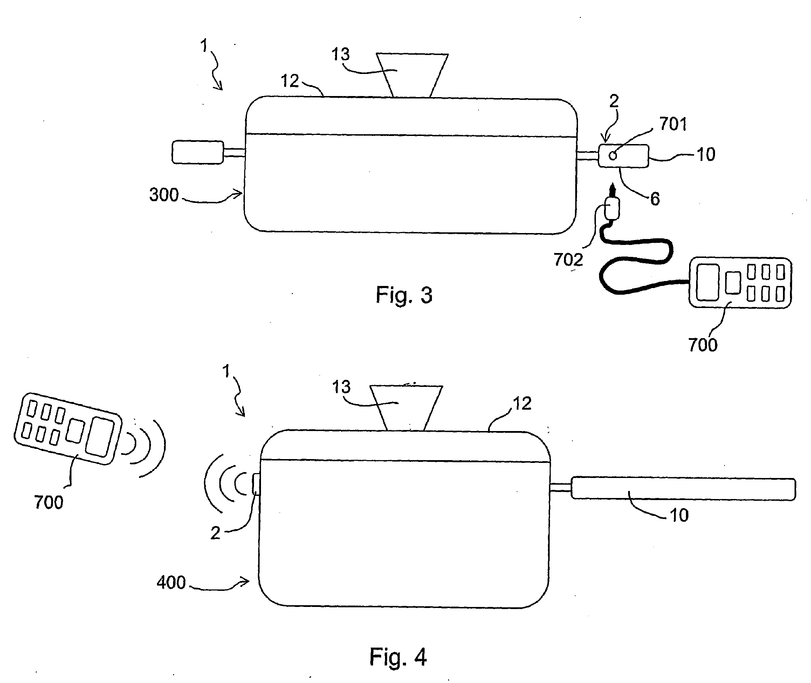

In accordance with several embodiments, such as that illustrated in Fig. 3, the re-programming of the memory 7 is carried out by cable. A socket 701 is placed on the airtight envelope 6, which is suitable for receiving a plug 702, such as a jack, or the like. Thereby, the external programming devices 700 can be placed in electrical connection with the internal memory 7 of the airtight envelope 6 by cable.

In accordance with other embodiments, such as that shown in Fig. 4, on the other hand, the re-programming of the memory 7 is carried out without the need of establishing direct electric contacts, in the so-called wireless mode. The data transmission to memory 7 in the wireless mode is capable of ensuring an increased sealing closure of the envelope 6.

Wireless transmission can be carried out using technologies and protocols that are known per se, which have been developed in the field of consumer electronics industry. Wireless transmission can be carried out using radio waves (such as Bluetooth technology or the like) or using optical signals (typically in the infrared frequencies).

By means of these technologies and protocols, a communication can be established between the external programming devices 700 and the internal memory 7 of the airtight envelope 6.

The embodiments of the invention which allow re-programming the memory 7 allow selecting the sound signal that will be emitted by the alarm 40. This sound signal can be, for example, acquired in a previously recorded form, or it may be composed by the user, or finally, it can be recorded by the user.

In the latter cases, the external programming devices 700 are preferably suitable for acquiring melodies or tone sequences, such as by means of a data stream from other digital media or by means of a microphone from the external environment.

The operation of a generic container 1 according to the invention is described below. In addition to the device 2, it also comprises a number of other accessories that make it comfortable and easy to use. One or more handles 10, a delivery spout 11, a lid 12 having a knob 13 can be generally comprised among these accessories.

To be heated, the container 1 is either placed on an external cooker or the internal heat sources are activated. During this step, like in any step of the operating life of the device 2, the sensor 3 takes the temperature in the immediate vicinity thereof at regular intervals, such as every second.

When the temperature value being measured exceeds a preset threshold value, the temperature sensor 3 sends a command to the signaller 4, and it remains inactivated for a prolonged time, such as a few minutes.

When the signaller 4 receives the command from the sensor 3, it is triggered and performs the sequence of sounds and/or lights as programmed in the memory 7. Thereby, the user is informed that the time is coming for a phase in the food or beverage preparation which requires his/her intervention.

In the embodiment illustrated in Fig. 1 and 2, the container 1 according to the invention is embodied by a coffee maker 200. The coffee maker 200 comprises, in a manner known per se, a boiler 201 for accommodating water, and a collector 202. The boiler 201 and the collector 202 are connected to each other by a duct 203. A chamber 204 for housing the coffee powder is positioned along the duct 203.

When the coffee beverage is being prepared, hot water rises from the boiler 201 along the duct 203. The beverage is formed by the water passing through the coffee powder in the chamber 204. The coffee beverage is then delivered to the collector 202.

The coffee maker 200 according to the invention further comprises (see particularly Fig. 2) the device 2. The device 2 comprises the temperature sensor 3 and the signaller 4.

The device 2 is preferably located in the knob 13 of the lid 12. This location allows fitting the device 2 onto coffee makers 200 that are already known per se.

Positioning the device 2 in the knob 13 further allows placing the temperature sensor 3 in the vicinity of the outlet of the duct 203 from which the coffee beverage is delivered.

The temperature sensor 3, due to the fact of being placed in the vicinity of the outlet of the duct 203, detects a sharp temperature increase as soon as the coffee beverage starts flowing from the duct 203. By means of a suitable calibration of the threshold value at which the command is sent to the signaller 4, the device signals in a very reliable manner the most appropriate time at which the heat supply to the coffee maker 200 must be reduced or interrupted.

A heat source external to the container is depicted in Fig. 1. Particularly, a gas cooker 900 is illustrated.

In the embodiment shown in Fig. 3, the container 1 according to the invention is embodied by a pan 300. The pan 300 comprises, in a manner known per se, two handles 10 and a lid 12 having a knob 13.

The pan 300 according to the invention further comprises the device 2. The device 2 comprises the temperature sensor 3 and the signaller 4.

In the embodiment in Fig. 3, the device 2 is positioned in the handle 10 of the pan 300. This positioning allows the device 2 to be fitted on pans 300 of a type known per se, in a very simple manner.

When a temperature increase exceeding the threshold value is detected, the temperature sensor 3 sends the command to the signaller 4. The device 2 thus signals the appropriate time at which the heat supply to the pan 300 must be reduced.

In Fig. 3, a system is exemplified for re-programming the memory 7 by cable. Particularly, external programming devices 700 are illustrated, which can be placed in contact with the memory 7 by cable, by means of a plug 702 and a socket 701.

In the embodiment shown in Fig. 4, the container 1 according to the invention is embodied by a saucepan 400. The saucepan 400 comprises, in a manner known per se, a handle 10 and a lid 12 having a knob 13.

The saucepan 400 according to the invention further comprises the device 2. The device 2 comprises the temperature sensor 3 and the signaller 4.

In the embodiment in Fig. 4, the device 2 is positioned on the side wall of the saucepan 400. This positioning allows the device to operate even when the saucepan 400 is not covered by the lid 12.

When a temperature increase exceeding the threshold value is detected, the temperature sensor 3 sends the command to the signaller 4. The device 2 thus signals the appropriate time at which the heat supply to the saucepan 400 must be reduced.

In Fig. 4, a system is exemplified for re-programming the memory 7 in a wireless manner. Particularly, external programming devices 700 are illustrated, which can be placed in contact with the memory 7 by means of radio waves or infrared light.

In the embodiment shown in Fig. 5, the container 1 according to the invention is embodied by a boiler 500. The boiler 500 comprises, in a manner known per se, a handle 10, a spout 11 having a valve 100 and a lid 12 having a knob 13.

The boiler 500 according to the invention further comprises the device 2. The device 2 comprises the temperature sensor 3 and the signaller 4.

In the embodiment in Fig. 5, the device 2 is positioned in the knob 13 of the lid 12. This positioning allows the device 2 to be fitted on boilers 500 of a type known per se, in a very simple manner.

The temperature sensor 3, when a temperature increase exceeding the threshold value is detected, sends the command to the signaller 4. The device 2 thus signals the appropriate time at which the heat supply to the boiler 500 must be reduced. This signal can be added to and/or replace the traditional whistle generated by the steam passing through the valve 110.

In Fig. 5, a heat source internal to the container is exemplified. Particularly, the electric resistances 901 are represented.

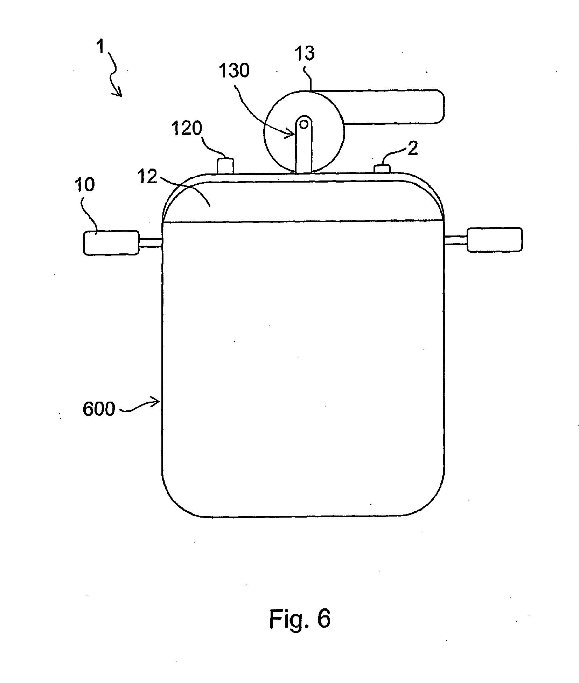

In the embodiment depicted in Fig. 6, the container 1 according to the invention is in the form of a pressure cooker 600. The pressure cooker 600 comprises a handle 10 and a lid 12, in a manner known per se The lid, in turn, comprises at least one valve 120 and a knob 13 integrated in a closure system 130.

The pressure cooker 600 according to the invention further comprises the device 2. The device 2 comprises the temperature sensor 3 and the signaller 4.

In the embodiment in Fig. 6, the device 2 is positioned within the lid 12. This positioning allows the device 2 to be fitted on pressure cookers 600 of a type known per se, in a very simple manner.

When a temperature increase exceeding the threshold value is detected, the temperature sensor 3 sends the command to the signaller 4. The device 2 thus signals the appropriate time at which the heat supply to the pressure cooker 600 must be reduced. This signal can be added to and/or replace the traditional whistle generated by the steam passing through the valve 120.

From what has been stated above, those skilled in the art will appreciate how the container 1 according to the invention overcomes the drawbacks cited relative to the prior art.

It should be understood that the particular characteristics are described with reference to the various embodiments of the container 1 by way of nonlimiting example.

Generally, it will be possible to position, for example, according to the particular requirements and without departing from the scope of the present invention, the device 2 either within the knob 13 of the lid 12, handle 10 of the container 1 or on the side wall of the container 1.

Similarly, it will be possible, according to the particular requirements, and without departing from the scope of the present invention to select between a container 1 to be placed on an external heat source 900 or a container 1 provided with internal heat sources 901.

Again, it will be possible to select, according to the particular requirements and without departing from the scope of the present invention, whether to arrange the device 2 of a re-programmable memory 7, and in this case, decide whether it has to be re-programmed by cable or wireless.

Finally, in accordance with several possible embodiments, the re-programming by the user may also involve the operating parameters of the temperature sensor 3: the activation time and frequency, duration of the prolonged inactivity phase after the command has been sent, and the temperature threshold value.

## Claims

1. A coffee maker (200) comprising
- a boiler (201) for accommodating water;
- a collector (202);
- a duct (203), the boiler (201) and the collector (202) being connected to each other by the duct (203);
- a chamber (204) for housing the coffee powder, positioned along the duct (203);
a device (2) comprising a temperature sensor (3) and a signaller (4) suitable to be triggered by said temperature sensor (3); **characterized by** the fact that the temperature sensor (3) is placed in the vicinity of the outlet of the duct (203),
such as to detect the temperature in an area where the vapours are released during preparation of the coffee.

2. A coffee maker according to any one of the preceding claims, comprising a lid (12) having a knob (13), the device (2) being located in the knob of the lid.

3. A coffee maker according to any one of the preceding claims, wherein the signaller (4) comprises an alarm (40) suitable for emitting tones or sequences of preset tones.

4. A coffee maker according to claim 3, wherein the alarm (40) is a buzzer suitable for repeating an individual tone.

5. A coffee maker according to claim 3, wherein the alarm (40) is of the "polyphonic" type.

6. A coffee maker according to any one of claims 1 to 2, wherein the signaller (4) comprises an optical-light emitter.

7. A coffee maker according to any one of the preceding claims, wherein the device (2) further comprises an energy source (5) suitable for supplying the temperature sensor (3) and signaller (4).

8. A coffee maker according to any one of the preceding claims, wherein the device (2) comprises an airtight envelope (6).

9. A coffee maker according to any one of the preceding claims, wherein the temperature sensor (3) has a cyclic operation, i.e. wherein the temperature sensor (3) normally remains in an inactivity state and is briefly activated at preset times for measuring the temperature.

10. A coffee maker according to any one of the preceding claims, wherein the temperature sensor (3) sends a command to the signaller, (4) when it detects a temperature value exceeding a preset threshold value.

11. A coffee maker according to any one of the preceding claims, wherein when the command has been transmitted to the signaller (4), the temperature sensor (3) turns to a prolonged inactivity phase.

12. A coffee maker according to any preceding claim, wherein the device (2) comprises a memory card (7) in which the sequence and duration of the signals emitted by the signaller (4) are programmed.

13. The container (1) according to claim 12, wherein the memory (7) can be re-programmed by the user.

## Patentansprüche

1. Kaffeebereiter (200) umfassend
- einen Kessel (201) zur Aufnahme von Wasser,
- eine Auffangvorrichtung (202),
- einen Leitungskanal (203), wobei der Kessel (201) und die Auffangvorrich-tung (202) mittels des Leitungskanals (203) verbunden sind,
- eine Kammer (204) zur Aufbewahrung des Kaffeepulvers, die entlang des Leitungskanals (203) angeordnet ist,
- eine Vorrichtung (2), die einen Temperatursensor (3) und einen Signalge-ber (4) umfasst, der geeignet ist, durch den Temperatursensor (3) ausge-löst zu werden, **dadurch gekennzeichnet,**
**dass** der Temperatursensor (3) nahe des Auslasses des Leitungskanals (203) derart angeordnet ist, dass die Temperatur in einem Bereich, in dem Dampf während der Zubereitung des Kaffees freigesetzt wird, ermittelt wird.

2. Kaffeebereiter gemäß irgend einem der vorangehenden Ansprüche, umfas-send einen Deckel (12), der einen Knopf (13) aufweist, wobei die Vorrichtung (2) in dem Knopf des Deckels angeordnet ist.

3. Kaffeebereiter gemäß irgend einem der vorangehenden Ansprüche, wobei der Signalgeber (4) eine Alarmeinrichtung (40) umfasst, die zur Abgabe von Tönen oder Sequenzen von vorprogrammierten Tönen geeignet ist.

4. Kaffeebereiter gemäß Anspruch 3, wobei die Alarmeinrichtung (40) ein Sum-mer ist, der zur Wiederholung eines einzelnen Tons geeignet ist.

5. Kaffeebereiter gemäß Anspruch 3, wobei die Alarmeinrichtung (40) von der Mehrton-Bauart ist.

6. Kaffeebereiter gemäß Anspruch 1 oder 2, wobei der Signalgeber (4) ein Licht-sender ist.

7. Kaffeebereiter gemäß irgend einem der vorangehenden Ansprüche, wobei die Vorrichtung (2) ferner eine Energiequelle (5) umfasst, die zur Stromversorgung des Temperatursensor (3) und des Signalgebers (4) geeignet ist.

8. Kaffeebereiter gemäß irgend einem der vorangehenden Ansprüche, wobei die Vorrichtung (2) eine luftdichte Umhüllung (6) umfasst.

9. Kaffeebereiter gemäß irgend einem der vorangehenden Ansprüche, wobei der Temperatursensor (3) zyklisch betrieben wird, d.h., wobei der Temperatursensor (3) normalerweise in einem inaktiven Zustand verbleibt und nur zu vorpro-grammierten Zeiten zum Messen der Temperatur aktiviert wird.

10. Kaffeebereiter gemäß irgend einem der vorangehenden Ansprüche, wobei der Temperatursensor (3) einen Befehl an den Signalgeber (4) sendet, wenn er ei-ne Temperatur, die einen vorbestimmten Grenzwert überschreitet, misst.

11. Kaffeebereiter gemäß irgend einem der vorangehenden Ansprüche, wobei dann, wenn der Befehl an den Signalgeber (4) übermittelt wurde, der Temperatursensor (3) in eine verlängerte inaktive Phase übergeht.

12. Kaffeebereiter gemäß irgend einem der vorangehenden Ansprüche, wobei die Vorrichtung (2) eine Speicherkarte (7) umfasst, auf der die Sequenz und die Dauer der Signale, die von dem Signalgeber (4) ausgegeben werden, pro-grammiert sind.

13. Behälter (1) gemäß Anspruch 12, wobei die Speicherkarte (7) durch den Be-nutzer neu programmierbar ist.

## Revendications

1. Cafetière (200) comprenant:
- une bouilloire (201) pour recevoir de l'eau;
- un collecteur (202);
- un conduit (203), la bouilloire (201) et le collecteur (202) étant raccordés l'un à l'autre par le conduit (203);
- une chambre (204) pour loger la poudre de café positionnée le long du conduit (203);
un dispositif (2) comprenant un capteur de température (3) et un dispositif de signalisation (4) adapté pour être déclenché par ledit capteur de température (3); **caractérisé en ce que** le capteur de température (3) est placé à proximité de la sortie du conduit (203), de manière à détecter la température dans une zone où les vapeurs sont libérées au cours de la préparation du café.

2. Cafetière selon la revendication 1, comprenant un couvercle (12) ayant un bouton (13), le dispositif (2) étant placé dans le bouton du couvercle.

3. Cafetière selon l'une quelconque des revendications précédentes, dans laquelle le dispositif de signalisation (4) comprend une alarme (40) appropriée pour émettre des sons ou des séquences de sons préréglés.

4. Cafetière selon la revendication 3, dans laquelle l'alarme (40) est un avertisseur approprié pour répéter un son individuel.

5. Cafetière selon la revendication 3, dans laquelle l'alarme (40) est de type "polyphonique".

6. Cafetière selon l'une quelconque des revendications 1 à 2, dans laquelle le dispositif de signalisation (4) comprend un émetteur de lumière optique.

7. Cafetière selon l'une quelconque des revendications précédentes, dans laquelle le dispositif (2) comprend en outre une source d'énergie (5) appropriée pour alimenter le capteur de température (3) et le dispositif de signalisation (4).

8. Cafetière selon l'une quelconque des revendications précédentes, dans laquelle le dispositif (2) comprend une enveloppe étanche à l'air (6).

9. Cafetière selon l'une quelconque des revendications précédentes, dans laquelle le capteur de température (3) a un fonctionnement cyclique, c'est-à-dire dans laquelle le capteur de température (3) reste normalement en état d'inactivité et est activé brièvement à des moments préréglés pour mesurer la température.

10. Cafetière selon l'une quelconque des revendications précédentes, dans laquelle le capteur de température (3) envoie une commande au dispositif de signalisation (4) lorsqu'il détecte une valeur de la température dépassant une valeur de seuil préréglée.

11. Cafetière selon l'une quelconque des revendications précédentes, dans laquelle, lorsque la commande a été transmise au dispositif de signalisation (4), le capteur de température (3) passe à une phase d'inactivité prolongée.

12. Cafetière selon l'une quelconque des revendications précédentes, dans laquelle le dispositif (2) comprend une carte mémoire (7) dans laquelle la séquence et la durée des signaux émis par le dispositif de signalisation (4) sont programmées.

13. Récipient (1) selon la revendication 12, dans lequel la mémoire (7,) peut être reprogrammée par l'utilisateur.
